# EUROPÄISCHE PATENTANMELDUNG

(11) **EP 4 726 296 A1**
(43) Veröffentlichungstag der Anmeldung: **15.04.2026**
(21) Anmeldenummer: 25192222.5
(22) Anmeldetag: 28.07.2025
(51) Int. Cl.: F25D 21/00, F25D 23/02

(54) **KLIMASCHRANK**

(30) Priorität: 14.10.2024 DE 102024129691
(71) Anmelder: Binder GmbH, 78532 Tuttlingen (DE)
(72) Erfinder: Arabul, Ahmet, 78532 Tuttlingen (DE); Buschle, Jochen, 78532 Tuttlingen (DE); Efinger, Patrick, 78554 Aldingen-Aixheim (DE); Urtic, Ante, 78087 Mönchweiler (DE)
(74) Vertreter: Westphal, Mussgnug & Partner Patentanwälte mbB

(57) **Zusammenfassung**

Die Erfindung betrifft einen Klimaschrank (1) mit einer Doppelflügeltür (10), die zwischen einer geöffneten und geschlossenen Position bewegbar ist, wobei die Doppelflügeltür (10) eine erste Tür (15) und eine zweite Tür (20) umfasst, wobei die erste Tür (15) eine erste Stirnseite (21) mit einem ersten Vorsprung (18) aufweist, und die zweite Tür (20) eine zweite Stirnseite (21) mit einem zweiten Vorsprung (23) aufweist, wobei die erste Stirnseite (21) und die zweite Stirnseite (22) in der geschlossenen Position im Wesentlichen einander zugewandt sind, wobei innerhalb des ersten Vorsprungs (18) der ersten Tür (15) ein Heizelement (30) angeordnet ist.

## Beschreibung

Die Erfindung betrifft einen Klimaschrank gemäß den Merkmalen des Patentanspruchs 1.

Klimaschränke sind aus dem Stand der Technik in unterschiedlichen Ausgestaltungen vorbekannt und werden in wissenschaftlichen Laboren oder im industriellen Einsatz zur Simulation von biologischen, chemischen und/oder physikalischen Umwelteinflüssen, wie beispielsweise Temperatur, Luftdruck und/oder Luftfeuchtigkeit verwendet. Ein Klimaschrank umfasst ein Gehäuse mit einem in dem Gehäuse angeordneten Innenraum, wobei in dem Innenraum die biologischen, chemischen und/oder physikalischen Umwelteinflüsse simuliert werden.

Weiterhin sind Klimaschränke bekannt, deren Innenraum über eine Doppelflügeltür, insbesondere über eine Doppelflügeltür, verschließbar ist. Doppelflügeltüren weisen eine erste und eine zweite Tür auf, die vorzugsweise jeweils drehbar an dem Gehäuse des Klimaschranks gelagert sind. Doppelflügeltüren haben den Vorteil, dass die erste und zweite Tür unabhängig voneinander geöffnet werden können, um z. B. die einzelnen Segmente eines segmentierten Innenraums unabhängig voneinander von außen zu erreichen. Außerdem benötigt das Öffnen einer zweiflügeligen Tür weniger Platz, da die Drehbewegung bei zwei Türen geringer ist als bei einer Tür, was in engen Laborräumen von Vorteil ist.

Typischerweise können Klimaschränke Temperaturen von -10°C bis 100°C einstellen, jedoch gibt es ebenso Klimaschränke für den Hochtemperaturbereich, die dauerhaft Temperaturen von bis zu 350°C im Innenraum einstellen können, oder auch Tiefkältegeräte, welche dauerhaft Temperaturen von bis zu -85°C einstellen können. Daher müssen die erste und die zweite Tür der Doppelflügeltür in geschlossenem Zustand möglichst dicht ausgebildet und zueinander angeordnet sein. Häufig weisen die erste und zweite Tür einen zueinander komplementären Falz auf, der jeweils durch einen ersten und zweiten Vorsprung ausgebildet ist, um das Abdichtverhalten zu verbessern.

Nachteilig an einem solchen Klimaschrank ist, dass im Bereich des Vorsprungs vermehrt Vereisung oder Betauung auftritt, was sich negativ auf das Dichtverhalten der Doppelflügeltür auswirken kann. Darüber hinaus kann eine Vereisung und/oder Betauung im Bereich des ersten und zweiten Vorsprungs zu einer Verfälschung der Probenintegrität und damit der Prüfergebnisse führen.

Die Aufgabe der Erfindung besteht daher darin, eine Vereisung und/oder Betauung im Bereich des Vorsprungs zu verhindern.

Diese Aufgabe wird durch einen Klimaschrank mit den Merkmalen des Patentanspruchs 1 gelöst.

Vorteilhafte Ausgestaltungen und Weiterbildungen der Erfindung werden in den Unteransprüchen angegeben.

Erfindungsgemäß ist demnach bei einem Klimaschrank mit einer Doppelflügeltür, die zwischen einer geöffneten und geschlossenen Position bewegbar ist, wobei die Doppelflügeltür eine erste Tür und eine zweite Tür umfasst, wobei die erste Tür eine erste Stirnseite mit einem ersten Vorsprung aufweist, und die zweite Tür eine zweite Stirnseite mit einem zweiten Vorsprung aufweist, wobei die erste Stirnseite und die zweite Stirnseite in der geschlossenen Position im Wesentlichen einander zugewandt sind, innerhalb des ersten Vorsprungs der ersten Tür ein Heizelement angeordnet. Vorteilhaft ist dabei, dass eine Betauung bei hohen Temperaturen und eine Vereisung bei tiefen Temperaturen im Bereich des ersten und zweiten Vorsprungs verhindert werden kann. Zudem ist das Heizelement innerhalb des Vorsprungs angeordnet und somit von außen nicht zugänglich, was den Vorteil hat, dass höhere Spannungen eingesetzt werden können, beispielsweise 230 V.

Der erste Vorsprung und der zweite Vorsprung bilden vorzugsweise zumindest teilweise einen Türfalz aus, wobei der erste und zweite Vorsprung bzw. deren Türfalze vorzugsweise so ausgebildet und angeordnet sind, dass sie in der geschlossenen Position zumindest teilweise komplementär ineinander greifen. Dadurch ist vorzugsweise zwischen dem ersten Vorsprung und dem zweiten Vorsprung ein Spalt ausgebildet. Der erste und zweite Vorsprung können auch derart ausgebildet und angeordnet sein, dass der erste Vorsprung formschlüssig an dem zweiten Vorsprung angeordnet ist und sich damit kein Spalt zwischen der ersten und zweiten Tür ausbildet. Aufgrund der Ausbildung eines ersten und zweiten Vorsprungs ist die Dichtigkeit der Doppelflügeltür erhöht.

Gemäß einer besonders bevorzugten Ausgestaltung der Erfindung erstreckt sich der erste Vorsprung im Wesentlichen über die Gesamtlänge der ersten Stirnseite und der zweite Vorsprung erstreckt sich im Wesentlichen über die Gesamtlänge der zweiten Stirnseite. Das hat den Vorteil, dass dadurch über die Gesamtlänge der ersten und zweiten Stirnseite ein erhöhtes Abdichtverhalten der Doppelflügeltür erreicht werden kann.

Nach einer vorteilhaften Weiterbildung der Erfindung verläuft das Heizelement im Wesentlichen über die Gesamtlänge des ersten Vorsprungs. Dadurch wird der erste Vorsprung über seine Gesamtlänge erwärmt, sodass sich über den gesamten ersten Vorsprung keine Betauung oder Vereisung bilden kann. Zudem strahlt das Heizelement seine Wärme ausgehend von dem ersten Vorsprung in Richtung des zweiten Vorsprungs ab, sodass eine Betauung und Vereisung auch im Bereich des zweiten Vorsprungs durch das innerhalb des ersten Vorsprungs angeordneten Heizelements verhindert werden kann.

Bevorzugterweise weist die Doppelflügeltür eine Vorderseite und eine Rückseite auf, wobei der erste Vorsprung in Richtung einer Längsachse, die die Vorderseite, und vorzugsweise die Rückseite, orthogonal schneidet und ausgehend von der Vorderseite in Richtung der Rückseite verläuft, zumindest teilweise hinter dem zweiten Vorsprung angeordnet ist. Durch diese Anordnung kann das Heizelement, das innerhalb des ersten Vorsprungs angeordnet ist, auf den zweiten Vorsprung thermisch einwirken und dadurch eine Betauung und Vereisung im gesamten Spaltbereich verhindern. Zudem kann die Anordnung eines Dichtelements innerhalb des Spalts bei einer solchen Anordnung des ersten und zweiten Vorsprungs einfacher und sicherer sein.

Im Zusammenhang mit dieser Erfindung wird die Vorderseite als die Seite definiert, die durch die erste und die zweite Tür gebildet wird, welche in der geschlossenen Position eine gemeinsame Fläche aufspannen, und die zur Außenumgebung weist.

Die Rückseite ist im Zusammenhang mit dieser Erfindung als diejenige Seite definiert, die durch die erste und die zweite Tür gebildet wird, welche in der geschlossenen Position eine gemeinsame Fläche aufspannen, und die zum Innenraum des Gehäuses des Klimaschranks weist.

Vorzugsweise ist das Heizelement in Richtung der Längsachse zumindest teilweise hinter dem zweiten Vorsprung angeordnet. Dadurch kann die thermische Kopplung zwischen dem im ersten Vorsprung angeordneten Heizelement und dem Spalt sowie dem zweiten Vorsprung verbessert werden.

Nach einer besonders vorteilhaften Ausgestaltung der Erfindung ist in der geschlossenen Position ein Dichtelement zwischen dem ersten Vorsprung und dem zweiten Vorsprung, insbesondere innerhalb des Spalts angeordnet. Das Dichtelement ist vorzugsweise aus einem zumindest teilweise elastischen Material gefertigt, sodass sich das Dichtelement gut an den ersten und/oder zweiten Vorsprung anschmiegen kann, um den Innenraum des Klimaschranks vor äußeren Einflüssen abzudichten.

Gemäß einer bevorzugten Weiterbildung der Erfindung weist das Heizelement einen Hinleiter und Rückleiter auf, wobei der Hinleiter und der Rückleiter im Wesentlichen innerhalb des ersten Vorsprungs angeordnet sind. Dadurch kann eine Wärmeabstrahlung über die gesamte Breite und Länge des ersten Vorsprungs erreicht werden, sodass der thermisch kritische Bereich im Bereich des ersten Vorsprungs vollständig Tau- und Eisfrei bleiben kann. Zudem kann ein kompakterer Aufbau des Klimaschranks erfolgen, wenn der Hinleiter und der Rückleiter im Wesentlichen parallel zueinander geführt sind.

Der Hinleiter und der Rückleiter sind vorzugsweise in Reihe geschaltet und elektrisch miteinander verbunden. Der Hinleiter und der Rückleiter können auch parallel zueinander verschaltet sein. Der Hinleiter und der Rückleiter sind vorzugsweise mit derselben Energiequelle elektrisch verbunden.

Bevorzugterweise weist das Heizelement in mindestens einem Eckbereich der ersten Tür einen schleifenförmigen Verlauf auf. In den Eckbereichen der ersten Tür kommt es zu einer verstärkten Betauung bzw. Vereisung. Ein schleifenförmiger Verlauf in mindesten einem Eckbereich kann eine größere Wärmeentwicklung in diesem Bereich bewirken, sodass der stärkeren Betauung und Vereisung in diesem Bereich entgegengewirkt werden kann.

Vorteilhafterweise weist das Heizelement einen elektrisch leitfähigen Draht mit einer Silikonummantelung auf. Der elektrisch leitfähige Draht ist vorzugsweise aus Kupfer ausgebildet. Der Draht kann auch aus jedem anderen leitfähigen Material ausgebildet sein. Der Draht kann aus einer Einzellitze oder aus vielen elektrisch miteinander verbundenen Einzellitzen ausgebildet sein. Die Einzellitzen können dabei sowohl in Reihe als auch parallel geschaltet sein. Um die Einzellitzen oder den einzelnen Draht kann jeweils eine Isolationsschicht angeordnet sein.

Innerhalb des ersten Vorsprungs der ersten Tür können vorteilhafterweise auch zwei oder mehrere, insbesondere unabhängig voneinander ansteuerbare, Heizelemente angeordnet sein.

Nach einer besonders vorteilhaften Ausgestaltung der Erfindung ist das Heizelement mit einer Niederspannungs-Gleichstromquelle elektrisch verbunden. Das Heizelement kann auch mit einer Hochspannungs-Gleichstromquelle oder mit einer Wechselspannungsquelle, beispielsweise dem in Europa üblichen 230V-Netz, elektrisch verbunden sein. Vorteilhaft an einer Niederspannungs-Gleichstromquelle ist, dass im Schadensfall auch ein Laie den Austausch oder die Reparatur einzelner elektrischer Komponenten vornehmen kann. Der Spannungsbereich der Niederspannungsgleichstromquelle liegt bevorzugterweise zwischen 12V und 60V.

Gemäß einer bevorzugten Weiterbildung der Erfindung weist die erste und zweite Tür einen aus einem thermisch gut leitenden Außenkorpus, vorzugsweise aus Edelstahl, auf, wobei der Außenkorpus mit einem thermisch gut isolierenden Schaum ausgespritzt ist. Vorteilhaft an einem thermisch gut leitenden Außenkorpus kann sein, dass die vom Heizelement abgegebene Wärme besser in Richtung des Spalts und des zweiten Vorsprungs abgestrahlt werden kann. Vorteilhaft an einem thermisch gut isolierenden Schaum kann sein, dass dadurch die erste und zweite Tür einen Austausch von Wärme und/oder Kälte auf ein Minimum reduzieren, bestenfalls ganz unterlassen.

Bevorzugterweise ist das Heizelement innerhalb des ersten Vorsprungs durch den Schaum fixiert. Dadurch kann das Heizelement innerhalb des ersten Vorsprungs auch bei einer von außen auf den Klimaschrank wirkenden mechanischen Belastung an seinem angedachten Ort bleiben. Im Herstellungsprozess wird das Heizelement innerhalb des ersten Vorsprungs eingelegt. Bevorzugterweise ist das Heizelement innerhalb des ersten Vorsprungs durch den Außenkorpus klemmend fixiert. Anschließend wird der Hohlraum, der durch den Außenkorpus definiert ist, mit einem Schaum, vorzugsweise einem Polyurethanschaum, ausgespritzt. Es kann auch ein Ethylen-Propylen-Dien-Monomer-Schaum, ein Silikonschaum oder ein Neoprenschaum verwendet werden.

Vorteilhafterweise berührt das Heizelement, insbesondere die Silikonummantelung des Drahts bzw. die Silikonummantelungen der Einzellitzen des Drahts, den Außenkorpus der ersten Tür an mindestens einer Stelle. Das Heizelement kann auch den Außenkorpus an zwei, drei oder mehr Stellen berühren. Vorzugsweise ist das Heizelement zwischen zwei Seitenflächen des Außenkorpus klemmend fixiert. Durch das Verspannen oder das Berühren ist eine gute thermische Kopplung zwischen dem Heizelement und dem Außenkorpus gegeben, wodurch wiederum der Wärmeübergang in die Umgebung, insbesondere in den Bereich des ersten und zweiten Vorsprungs, verbessert werden kann.

Gemäß einer vorteilhaften Weiterbildung der Erfindung ist eine Flächenheizung mit der ersten und/oder zweiten Tür thermisch gekoppelt. Eine Flächenheizung kann eingesetzt werden, um über die gesamte Türfläche einen Vereisungsschutz sowie ein Betauungsschutz zu erreichen. Die Flächenheizung ist vorzugsweise schleifenförmig innerhalb des Hohlraums, der insbesondere durch den Außenkorpus definiert ist, angeordnet und kann durch das Einspritzen des Schaumes mechanisch fixiert werden. Das Heizelement und die Flächenheizung können elektrisch miteinander verbunden sein. Die Flächenheizung und das Heizelement können in Reihe oder parallel geschaltet sein. Die Flächenheizung kann mit einer anderen Stromquelle als das Heizelement elektrisch verbunden sein oder die Flächenheizung kann mit derselben Stromquelle wie das Heizelement elektrisch verbunden sein.

Nach einer besonders bevorzugten Ausgestaltung der Erfindung ist innerhalb des zweiten Vorsprungs ein zweites Heizelement angeordnet. Aufgrund des begrenzten Platzes innerhalb des ersten Vorsprungs kann es sich empfehlen, innerhalb des zweiten Vorsprungs ein zweites Heizelement anzuordnen. Das zweite Heizelement kann dabei gleich ausgebildet sein wie das Heizelement innerhalb des ersten Vorsprungs.

Ein Ausführungsbeispiel der Erfindung wird anhand der nachfolgenden Figuren ausführlich erläutert. Es zeigen
- Fig. 1: eine Ansicht von vorne auf ein Ausführungsbeispiel eines Klimaschranks mit einer Doppelflügeltür, wobei eine erste Tür in einer geschlossene Position und eine zweite Tür in einer geöffneten Position angeordnet ist,
- Fig. 2: eine perspektivische Ansicht auf den Klimaschrank gemäß Fig. 1,
- Fig. 3: eine Ansicht von oben auf den Klimaschrank gemäß Fig. 3 mit einer Doppelflügeltür in einer geschlossenen Position,
- Fig. 4: eine Ausschnittvergrößerung eines Querschnitts durch den Klimaschrank gemäß Fig. 3 und
- Fig. 5: eine Ausschnittvergrößerung eines Querschnitts durch den Klimaschrank gemäß Fig. 3 mit einem angeordneten Dichtelement, wobei das Dichtelement trotz geschlossener Tür im unbelasteten Zustand dargestellt ist.

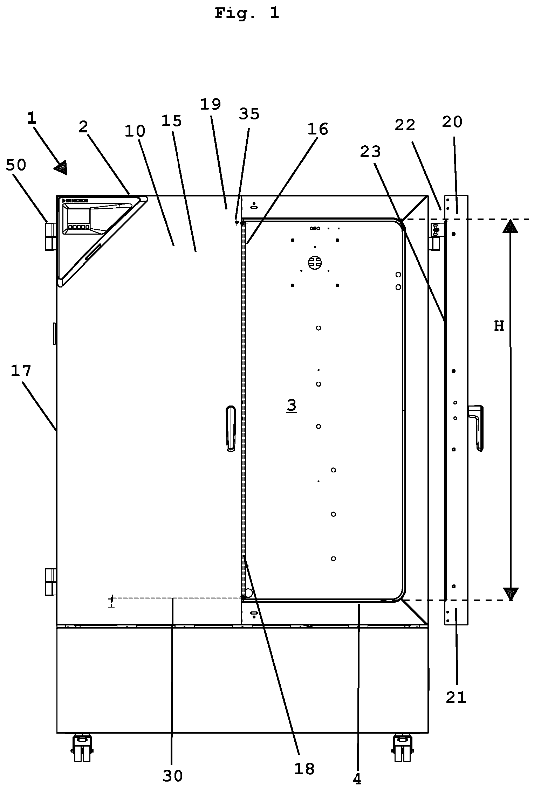

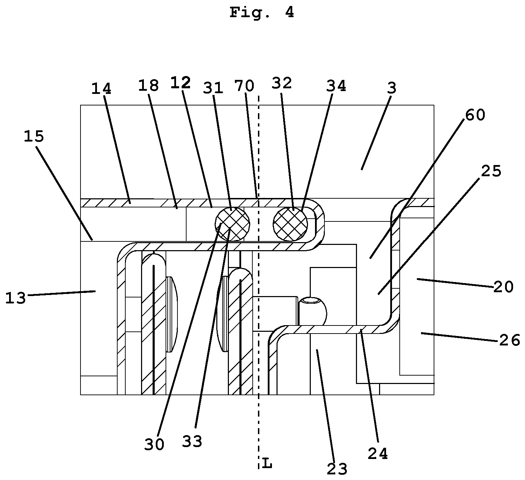

Die Figuren 1 bis 5 zeigen verschiedene Ansichten eines Ausführungsbeispiels eines erfindungsgemäßen Klimaschranks 1 mit einem Gehäuse 2 und einem innerhalb des Gehäuses 2 angeordneten Innenraum 3 mit einer Höhe H und einem Boden 4.

Der Innenraum 3 des Gehäuses 2 ist über eine Doppelflügeltür 10 verschließbar. Die Doppelflügeltür 10 umfasst eine erste Tür 15 und eine zweite Tür 20.

Die erste Tür 15 und die zweite Tür 20 sind zwischen einer geöffneten und geschlossenen Position bewegbar. Die Doppelflügeltür 10 ist in einer geschlossenen Position, wenn die erste Tür 15 und die zweite Tür 20 in einer geschlossenen Position sind. Die Doppelflügeltür 10 ist in einer geöffneten Position, wenn die erste Tür 15 und/oder zweite Tür 20 in einer geöffneten Position sind.

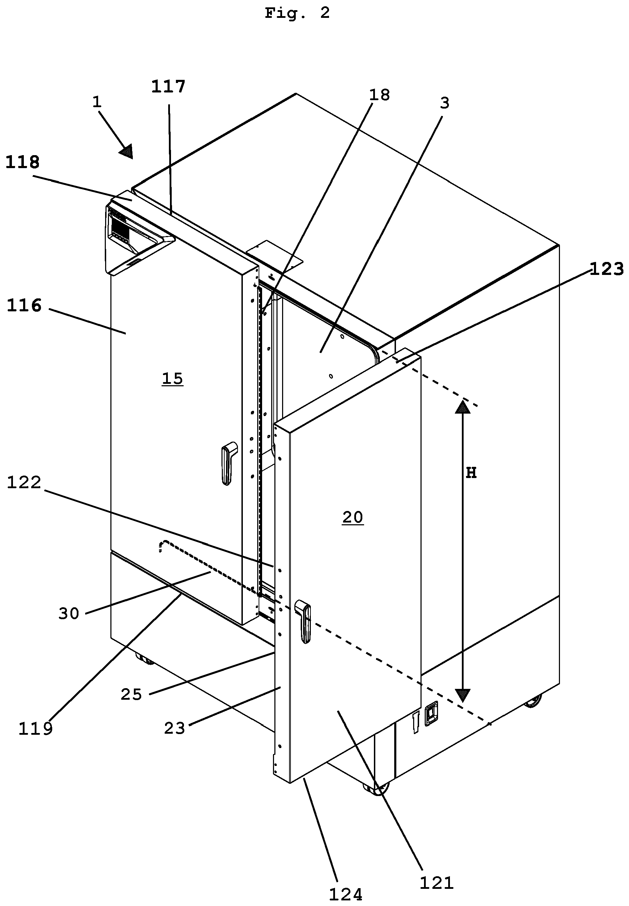

Die erste Tür 15 weist eine erste Vorderseite 116, eine erste Rückseite 117, eine erste Seitenfläche 17, eine erste Stirnseite 16 sowie eine erste Oberfläche 118 und eine erste Unterfläche 119 auf. Die erste Seitenfläche 17 und die erste Stirnseite 16, die erste Oberfläche 118 und die erste Unterfläche 119 sowie die erste Vorderseite 116 und die erste Rückseite 117 können jeweils gegenüberliegend angeordnet sein (vgl. Fig. 2). Die erste Tür 15 kann einen Außenkorpus 14 und einen mit Schaum gefüllten Innenbereich 13 aufweisen.

Die zweite Tür 20 weist eine zweite Vorderseite 121, eine zweite Rückseite 122, eine zweite Seitenfläche 22, eine zweite Stirnseite 21 sowie eine zweite Oberfläche 123 und eine zweite Unterfläche 124 auf. Die zweite Seitenfläche 22 und die zweite Stirnseite 21, die zweite Oberfläche 123 und die zweite Unterfläche 124 sowie die zweite Vorderseite 121 und die zweite Unterseite 122 können jeweils gegenüberliegend angeordnet sein (vgl. Fig. 2). Die zweite Tür 20 kann einen Außenkorpus 24 und einen mit Schaum gefüllten Innenbereich 26 aufweisen.

Der Außenkorpus 14, 24 der ersten Tür 15 und der zweiten Tür 20 ist vorzugsweise aus einem thermisch gut leitenden Material ausgebildet, besonders bevorzugt aus Edelstahl. Der Außenkorpus 14, 24 der ersten Tür 15 und/oder der zweiten Tür 20 kann auch aus Aluminium ausgebildet sein. Der Schaum, mit dem der Innenbereich 13, 26 der ersten Tür und/oder der zweiten Tür 20 gefüllt sein kann, ist vorzugsweise ein Polyurethan-Schaum.

Der Schaum kann auch ein Ethylen-Propylen-Dien-Monomer-Schaum, ein Silikonschaum oder ein Neoprenschaum sein.

Die erste Tür 15 kann an der ersten Seitenfläche 17 über zwei Scharniere 50 an dem Gehäuse 2 des Klimaschranks 1 drehbar gelagert sein. Die zweite Tür 20 kann an der zweiten Seitenfläche 22 über zwei Scharniere 50 an dem Gehäuse 2 des Klimaschranks 1 drehbar gelagert sein.

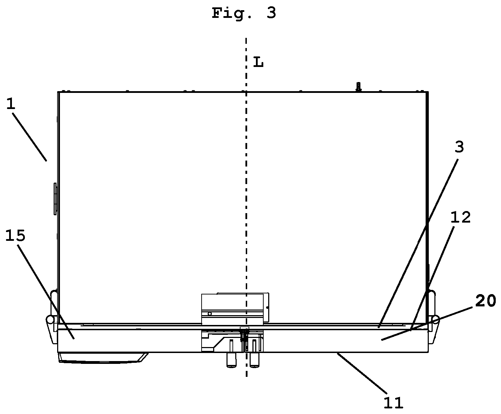

In der geschlossenen Position sind die erste Stirnseite 16 der ersten Tür 15 und die zweite Stirnseite 21 der zweiten Tür 20 einander zugewandt (vgl. Fig. 3).

Die erste Tür 15 und die zweite Tür 20 spannen in der geschlossenen Position gemeinsam eine Vorderseite 11 und eine Rückseite 12 der Doppelflügeltür 10 des Klimaschranks 1 auf. Die Vorderseite 11 weist in Richtung der Außenumgebung, wohingegen die Rückseite 12 in Richtung des Innenraums 3 des Gehäuses 2 des Klimaschranks 1 weist.

Der Klimaschrank 1 weist eine Längsachse L auf, die die Vorderseite 11 orthogonal schneidet. Die Längsachse L schneidet ebenfalls die Hinterseite 12, wobei die Längsachse L die Hinterseite 12 vorzugsweise ebenfalls orthogonal schneidet. Die Längsachse L verläuft ausgehend von der Vorderseite 11 in Richtung der Rückseite 12 (vgl. Fig. 3).

Die erste Stirnseite der ersten Tür 15 weist einen ersten Vorsprung 18 auf. Die erste Stirnseite 16 der ersten Tür 15 ist damit stufenförmig ausgebildet. Der erste Vorsprung 18 der ersten Tür 15 spannt zumindest teilweise die Rückseite 12 der Doppelflügeltür 10 des Klimaschranks 1 mit auf. Der erste Vorsprung 18 der ersten Tür 15 weist dabei insbesondere in Richtung der zweiten Tür 20.

Die zweite Tür 20 weist einen zweiten Vorsprung 23 auf. Die zweite Stirnseite 21 der zweiten Tür 20 ist damit stufenförmig ausgebildet. Der zweite Vorsprung 23 weist dabei insbesondere in Richtung der ersten Tür 15.

Der erste Vorsprung 18 der ersten Tür 15 kann sich über nahezu die gesamte Höhe H des Innenraums 3 des Klimaschranks 1 erstrecken. Der zweite Vorsprung 23 der zweiten Tür 20 ist vorzugsweise komplementär zu dem ersten Vorsprung 18 der ersten Tür 15 ausgebildet. In der geschlossenen Position kann sich der erste Vorsprung 18 der ersten Tür 15 in eine durch den zweiten Vorsprung 23 der zweiten Tür 20 ausgebildete Ausnehmung 25 einschmiegen, wobei sich zwischen der ersten Tür 15 und der zweiten Tür 20, insbesondere zwischen dem ersten Vorsprung 18 und dem zweiten Vorsprung 23, ein Spalt 60 ausbilden kann.

Der erste Vorsprung 18 kann in der geschlossenen Position in Richtung der Längssachse L vorzugsweise zumindest teilweise hinter dem zweiten Vorsprung 23 angeordnet sein.

Der erste Vorsprung 18 der ersten Tür 15 kann in Richtung der Längsachse L kleiner ausgebildet sein als der zweite Vorsprung 23 der zweiten Tür 20. Der erste Vorsprung 18 der ersten Tür 15 ist in Richtung einer gedachten Achse, die parallel zur ersten Vorderseite 116 verläuft, länger ausgebildet als der zweite Vorsprung 23 der zweiten Tür 20.

Innerhalb des ersten Vorsprungs 18 ist ein Heizelement 30, das in den Figuren 1 und 2 durch gestrichelte Linien dargestellt ist, angeordnet. Das Heizelement 30 kann sich abschnittsweise entlang der ersten Stirnseite 16 der ersten Tür 15 erstrecken. Das Heizelement 30 erstreckt sich bevorzugterweise über die gesamte Höhe H des Innenraums 3 des Gehäuses 2 des Klimaschranks 1. Das Heizelement 30 kann sich auch im Wesentlichen über die komplette erste Stirnseite 16 der ersten Tür 15 erstrecken.

Das Heizelement 30 kann in einem Randbereich des Innenraums 3 eine Schleife 35 in seinem Verlauf aufweisen (vgl. Fig. 1). Durch die Schleife 35 kann der thermisch kritische Bereich der ersten Tür 15, nämlich ein Eckbereich 19, der zwischen der ersten Stirnseite 16 und der ersten Oberfläche 118 und/oder der ersten Unterfläche 119 angeordnet ist, besser erwärmt werden.

Das Heizelement 30 ist vorzugsweise mit einer Niederspannungs-Gleichstromquelle (nicht zu sehen) elektrisch verbunden. Die Niederspannungs-Gleichstromquelle kann seine Energie aus einer Batterie (nicht zu sehen) oder einem elektrischen Netz (nicht zu sehen) beziehen. Der Spannungsbereich der Niederspannungs-Gleichstromquelle liegt bevorzugterweise zwischen 12V und 60V. Der Klimaschrank 1 kann auch seine Energie aus einem Wechselstromnetz beziehen. Vorzugsweise weist das Wechselstromnetz einen Spannungswert von 230 V auf. Durch die Anordnung des Heizelements 30 innerhalb des ersten Vorsprungs ist das Heizelement von außen nicht zugänglich, sodass eine versehentliche Berührung des Heizelements 30 vermieden werden kann.

Das Heizelement 30 weist vorzugsweise einen Hinleiter 31 und einen Rückleiter 32 auf, wobei der Hinleiter 31 und der Rückleiter 32 in Reihe geschaltet sind. Der Hinleiter 31 und der Rückleiter 32 können auch parallel zueinander verschaltet sein. Der Hinleiter 31 und der Rückleiter 32 sind mit der Niederspannungs-Gleichstromquelle (nicht zu sehen) elektrisch verbunden, wobei der Hinleiter 31 näher an einem Pluspol und der Rückleiter 32 näher an einem Minuspol der Niederspannungs-Gleichstromquelle angeordnet ist.

Es kann auch lediglich der Hinleiter 31 innerhalb des ersten Vorsprungs 18 der ersten Tür 15 verlaufen und der Rückleiter 32 als Flächenheizung (nicht zu sehen) der ersten Tür 15 fungieren oder vice versa.

Das Heizelement 30 kann innerhalb des Klimaschranks 1 ausgehend von einer Niederspannungs-Gleichstromquelle (nicht zu sehen) zunächst parallel zur ersten Vorderseite 116 der ersten Tür 15 innerhalb der ersten Tür 15 verlaufen. Anschließend kann das Heizelement 30 innerhalb des ersten Vorsprungs 18 im Wesentlichen über die Gesamtlänge der Stirnseite 16 der ersten Tür 15 hin und zurück verlaufen, um anschließend wieder parallel zur ersten Vorderseite 116 der ersten Tür 15 innerhalb der ersten Tür 15 zur Niederspannungs-Gleichstromquelle zurück geführt sein zu können (vgl. Fig. 1). Die gemessene Länge, die das Heizelement 30 innerhalb des ersten Vorsprungs 18 zurücklegt kann mehr als 50 Prozent, vorzugsweise mehr als 60, ganz besonders bevorzugt mehr als 80 Prozent der gemessenen Gesamtlänge des Heizelements 30 entsprechen, wobei Start und Ziel der gemessenen Gesamtlänge jeweils die Niederspannungs-Gleichstromquelle ist.

Das Heizelement 30 kann innerhalb des ersten Vorsprungs 18 der ersten Tür 15 zumindest abschnittsweise einen mäanderförmigen Verlauf aufweisen.

Das Heizelement 30 weist vorzugsweise einen Draht 33 mit einer Silikonummantelung 34 auf. Die Silikonummantelung 34 muss dabei dick genug sein, um eine ausreichend große Isolierung zwischen dem Draht 33 und dem elektrisch leitfähigen Außenkorpus 14 der ersten Tür 15 bereitzustellen, jedoch dünn genug sein, sodass die Wärme ausgehend von dem Draht 33 in den Außenkorpus 14 der ersten Tür 15 und von dort in den Spalt 60 abstrahlen kann.

Der Draht 33 ist vorzugsweise aus Kupfer oder Aluminium ausgebildet, wobei der Draht aus jedem elektrisch leitfähigen Material ausgebildet sein kann. Der Draht 33 kann eine Einzellitze aufweisen oder mehrere Einzellitzen aufweisen. Die mehreren Einzellitzen können parallel oder in Reihe verschaltet sein. Der Draht 33 ist mit der Niederspannungs-Gleichstromquelle (nicht zu sehen) elektrisch verbunden.

Das Heizelement 30 ist innerhalb des ersten Vorsprungs 18 der ersten Tür 15 vorzugsweise derart angeordnet, dass die Silikonummantelung 34 des Drahts 33 an dem Außenkorpus 14 der ersten Tür 15 sehr nahe, vorzugsweise direkt, angeordnet ist. Dadurch ist die thermische Kopplung zwischen Heizelement 30 und Außenkorpus 14 der ersten Tür 15 größer. Das Heizelement 30 berührt vorzugsweise den Außenkorpus 14 der ersten Tür 15 an zwei Stellen. Das Heizelement 30 kann den Außenkorpus 14 der ersten Tür 15 auch an mehr als zwei Stellen berühren. Das Heizelement 30 kann zwischen zwei Seitenflächen 70 des Außenkorpus 14 der ersten Tür 15 klemmend fixiert sein. Vorzugsweise ist sowohl der Hinleiter 31 als auch der Rückleiter 32 des Heizelements 30 zwischen zwei Seitenflächen 70 des Außenkorpus 14 der ersten Tür 15 klemmend fixiert.

Das Heizelement 30, vorzugsweise der Hinleiter 31 und der Rückleiter 32, sind aufgrund des Ausschäumens des Innenbereichs 13 der ersten Tür 15 mechanisch fixiert.

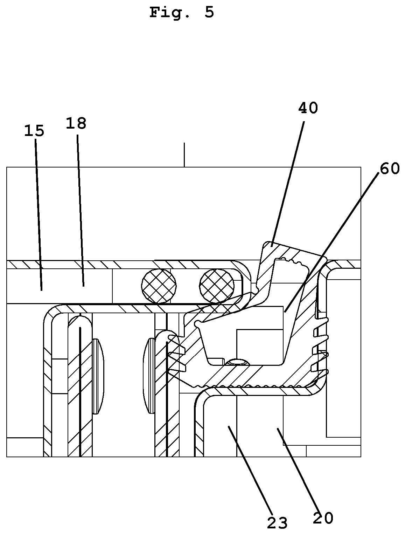

Zwischen der ersten Tür 15 und zweiten Tür 20 kann in der geschlossenen Position ein Dichtelement 40 angeordnet sein, wobei in der Figur 5 das Dichtelement 40 trotz geschlossener Tür im unbelasteten Zustand dargestellt ist.

Das Dichtelement 40 kann aus einem elastischen Material, vorzugsweise aus einem Elastomer oder aus Silikon, ausgebildet sein.

Das Dichtelement 40 kann an der ersten Tür 15 oder an der zweiten Tür 20 mechanisch fixiert sein. Es kann auch ein Dichtelement 40 mit der ersten Tür 15 und ein weiteres Dichtelement 40 mit der zweiten Tür 15 mechanisch fixiert sein. In der geschlossenen Position kann sich das Dichtelement 40 verformen, sodass es passgenau innerhalb des Spaltes 60 angeordnet sein kann.

Bevorzugterweise weist der erste Vorsprung 18 der ersten Tür 15 und der zweite Vorsprung 23 der zweiten Tür 20 abgerundete Kanten auf, um das Dichtelement 40 beim Schließen der Doppelflügeltür 10 nicht zu beschädigen.

Ein zweites Heizelement (nicht dargestellt) kann innerhalb des zweiten Vorsprungs 23 angeordnet sein. Das zweite Heizelement kann insbesondere die anhand des Heizelements 30 beschriebenen technischen Merkmale aufweisen und in analoger Weise wie das Heizelement 30 im ersten Vorsprung 18 der ersten Tür 15 im zweiten Vorsprung 23 angeordnet sein.

### Bezugszeichenliste

- 1: Klimaschrank
- 2: Gehäuse
- 3: Innenraum
- 4: Boden (Innenraum)

- 8: Oberkante
- 9: Unterkante
- 10: Doppelflügeltür
- 11: Vorderseite
- 12: Rückseite
- 13: Innenbereich
- 14: Außenkorpus (erste Tür)
- 15: Erste Tür
- 16: Erste Stirnseite
- 17: Erste Seitenfläche
- 18: Erster Vorsprung
- 19: Eckbereich

- 20: Zweite Tür
- 21: Zweite Stirnseite
- 22: Zweite Seitenfläche
- 23: Zweiter Vorsprung
- 24: Außenkorpus (zweite Tür)
- 25: Ausnehmung
- 26: Innenbereich

- 30: Heizelement
- 31: Hinleiter
- 32: Rückleiter
- 33: Draht
- 34: Silikonummantelung
- 35: Schleife

- 40: Dichtelement

- 50: Scharnier

- 60: Spalt

- 70: Seitenflächen

- 116: Erste Vorderseite
- 117: Erste Rückseite
- 118: Erste Oberfläche
- 119: Erste Unterfläche

- 121: Zweite Vorderseite
- 122: Zweite Rückseite
- 123: Zweite Oberfläche
- 124: Zweite Unterfläche

- L: Längsachse
- H: Höhe (Innenraum)

## Patentansprüche

1. Klimaschrank (1) mit einer Doppelflügeltür (10), die zwischen einer geöffneten und geschlossenen Position bewegbar ist, wobei die Doppelflügeltür (10) eine erste Tür (15) und eine zweite Tür (20) umfasst, wobei die erste Tür (15) eine erste Stirnseite (16) mit einem ersten Vorsprung (18) aufweist, und die zweite Tür (20) eine zweite Stirnseite (21) mit einem zweiten Vorsprung (23) aufweist, wobei die erste Stirnseite (16) und die zweite Stirnseite (21) in der geschlossenen Position im Wesentlichen einander zugewandt sind,
**dadurch gekennzeichnet, dass** innerhalb des ersten Vorsprungs (18) der ersten Tür (15) ein Heizelement (30) angeordnet ist.

2. Klimaschrank (1) nach Anspruch 1,
**dadurch gekennzeichnet, dass** der erste Vorsprung (18) sich im Wesentlichen über die Gesamtlänge der ersten Stirnseite (16) erstreckt und der zweite Vorsprung (23) sich im Wesentlichen über die Gesamtlänge der zweiten Stirnseite (21) erstreckt.

3. Klimaschrank (1) nach einem der vorherigen Ansprüche,
**dadurch gekennzeichnet, dass** das Heizelement (30) im Wesentlichen über die Gesamtlänge des ersten Vorsprungs (18) verläuft.

4. Klimaschrank (1) nach einem der vorherigen Ansprüche,
**dadurch gekennzeichnet, dass** die Doppelflügeltür (10) eine Vorderseite (11) und eine Rückseite (12) aufweist, wobei der erste Vorsprung (16) in Richtung einer Längsachse (L), die die Vorderseite (11) orthogonal schneidet und ausgehend von der Vorderseite (11) in Richtung der Rückseite (12) verläuft, zumindest teilweise hinter dem zweiten Vorsprung (23) angeordnet ist.

5. Klimaschrank (1) nach Anspruch 4,
**dadurch gekennzeichnet, dass** das Heizelement (30) in Richtung der Längsachse (L) zumindest teilweise hinter dem zweiten Vorsprung (23) angeordnet ist.

6. Klimaschrank (1) nach einem der vorherigen Ansprüche,
**dadurch gekennzeichnet, dass** in der geschlossenen Position ein Dichtelement (40) zwischen dem ersten Vorsprung (18) und dem zweiten Vorsprung (23) angeordnet ist.

7. Klimaschrank (1) nach einem der vorherigen Ansprüche,
**dadurch gekennzeichnet, dass** das Heizelement (30) einen Hinleiter (31) und Rückleiter (32) aufweist, wobei der Hinleiter (31) und der Rückleiter (32) im Wesentlichen innerhalb des ersten Vorsprungs (18) angeordnet ist.

8. Klimaschrank (1) nach einem der vorherigen Ansprüche,
**dadurch gekennzeichnet, dass** das Heizelement (30) in mindestens einem Eckbereich (19) der ersten Tür (15) einen schleifenförmigen Verlauf aufweist.

9. Klimaschrank (1) nach einem der vorherigen Ansprüche,
**dadurch gekennzeichnet, dass** das Heizelement (30) einen elektrisch leitfähigen Draht (33) mit einer Silikonummantelung (34) aufweist.

10. Klimaschrank (1) nach einem der vorherigen Ansprüche,
**dadurch gekennzeichnet, dass** das Heizelement (30) mit einer Niederspannungs-Gleichstromquelle elektrisch verbunden ist.

11. Klimaschrank (1) nach einem der vorherigen Ansprüche,
**dadurch gekennzeichnet, dass** die erste Tür (15) und die zweite Tür (20) einen aus einem thermisch gut leitenden Außenkorpus (14, 24), vorzugsweise aus Edelstahl, aufweist, wobei der Außenkorpus (14, 24) mit einem thermisch gut isolierenden Schaum ausgespritzt ist.

12. Klimaschrank (1) nach einem der vorherigen Ansprüche,
**dadurch gekennzeichnet, dass** das Heizelement (30) innerhalb des ersten Vorsprungs (18) durch den Schaum fixiert ist.

13. Klimaschrank (1) nach einem der vorherigen Ansprüche,
**dadurch gekennzeichnet, dass** das Heizelement (30) den Außenkorpus (14) der ersten Tür (15) an mindestens einer Stelle berührt.

14. Klimaschrank (1) nach einem der vorherigen Ansprüche,
**dadurch gekennzeichnet, dass** eine Flächenheizung mit der ersten Tür (15) und/oder zweiten Tür (20) thermisch gekoppelt ist.

15. Klimaschrank (1) nach einem der vorherigen Ansprüche,
**dadurch gekennzeichnet, dass** innerhalb des zweiten Vorsprungs (23) ein zweites Heizelement angeordnet ist.
